# EUROPEAN PATENT APPLICATION

(11) **EP 1 561 995 A1**
(43) Date of publication of application: **10.08.2005**
(21) Application number: 05425047.7
(22) Date of filing: 03.02.2005
(51) Int. Cl.: F23D 14/38, F23D 14/66, F23D 14/28, F23D 11/44

(54) **Gas soldering torch with fuel preheating**

(30) Priority: 06.02.2004 IT BS20040005 U
(71) Applicant: Gnali Bocia S.r.l., 25086 Lumezzane Valle (Brescia) (IT)
(72) Inventor: Gnali, Luigi, 25066 Lumezzane Valle (BS) (IT); Gnali, Gianbattista, 25066 Lumezzane Valle (BS) (IT); Gnali, Andrea, 25066 Lumezzane Valle (BS) (IT)
(74) Representative: Sangiacomo, Fulvia

(57) **Abstract**

This invention concerns a gas welder which comprises a body and in said body a burner, a control valve of the transit of gas from a liquid gas cartridge to the burner through a nozzle, and eventually a piezoelectric lighter and is characterised by a means (23) of circulating and heating the gas supplied by the liquid gas cartridge so as to eliminate the liquid phase before the gas reaches nozzle and burner.

## Description

### Field of the Invention

This invention concerns a pistol type gas welder, connectable to a cartridge containing a supplying liquid gas, such as a propane-butane mix or like.

### Prior Art

Gas welders, such as the type mentioned above, which are incorporate in particular, a control valve of the flow of gas from a liquid gas cartridge to the burner through a nozzle and possibly a lighter, piezoelectric for example, are already well known. In this kind of welder, the gas passes from the liquid gas cartridge to the burner. Under some conditions, the gas exiting the cartridge may not fully expand so that gas may arrive at the burner still in the liquid phase, in the form of drops which can cause operating drawbacks and faults in the use of the equipment that the users are well aware of.

### Obiects of the Invention

One objective of this invention is to remove the above drawbacks so as to make the use of a gas welder such as the one mentioned above safer and more reliable.

In the same way, a further objective of the invention is to provide a gas welder incorporating a system able to favour complete expansion of the gas before it reaches the burner and therefore to prevent liquid gas particles reaching the burner.

These objectives and implicit advantages stemming from them are achieved, in compliance with the invention, with a gas welder comprising a means for circulating and heating of the gas exiting the liquid gas cartridge before the gas reaches the nozzle, consequently the burner, so as to avoid the latter being reached by gas in liquid form.

### Brief Description of the Drawing

The invention will however become more evident in the continuation of this description made in reference to the enclosed indicative and not limiting drawings, in which:

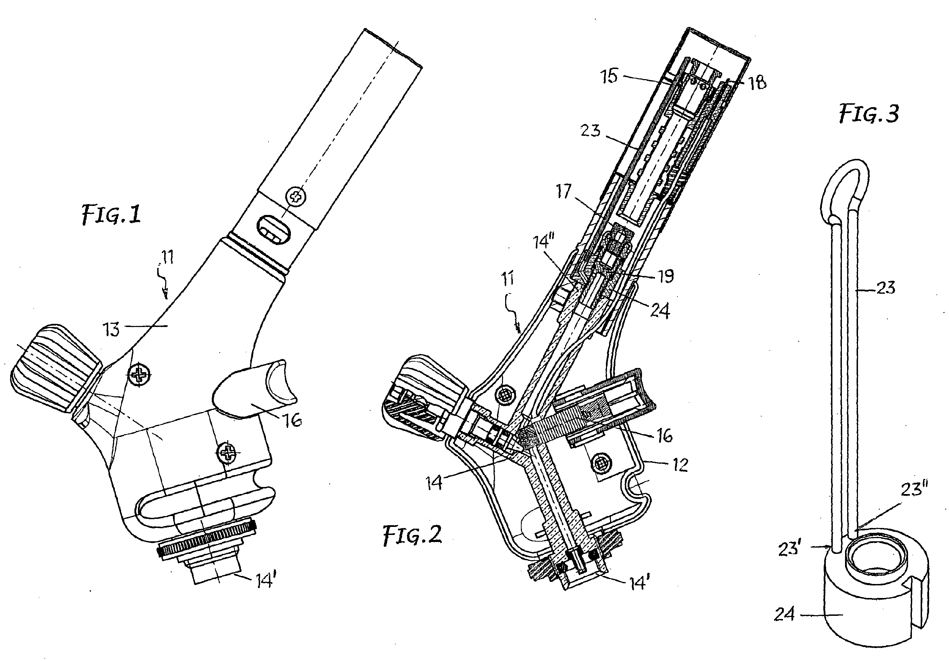

Fig.1 shows an external view of the welder;
Fig.2 shows a longitudinal section of the welder assembly;
Fig. 3 shows the pipe for heating the gas before being delivered to the burner;

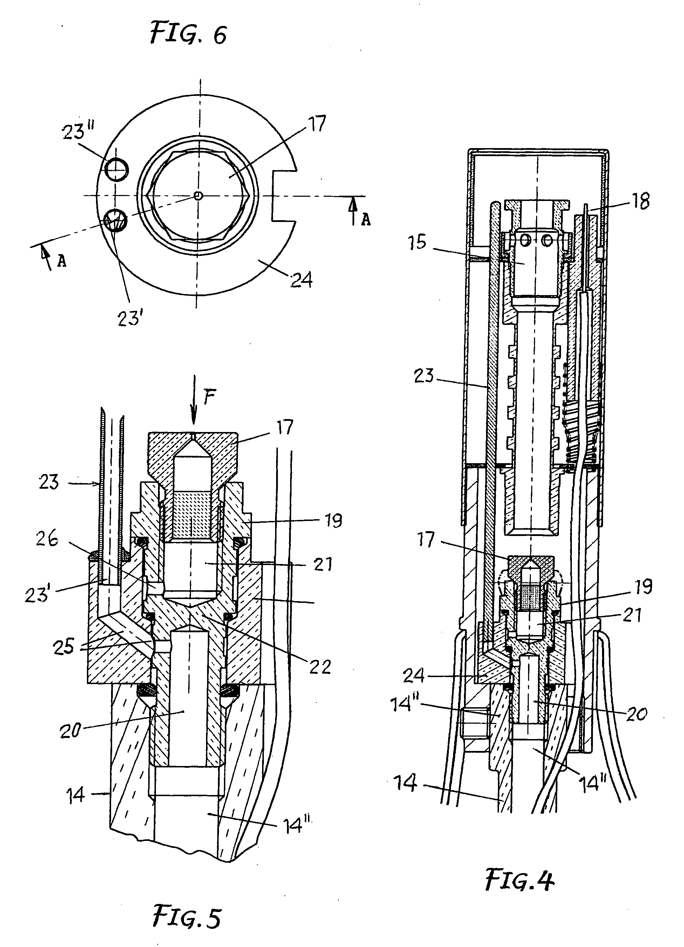

Fig. 4 shows an enlarged part of the welder comprising nozzle and burner in a section taken in the plane of the gas entrance into the heating pipe;
Fig. 5 shows a cross section of a part of Fig. 4, enlarged even further, on a level with the nozzle and corresponding to the arrows A-A in Fig. 6;
Fig. 6 shows a view in the direction of the arrow F in Fig. 5;

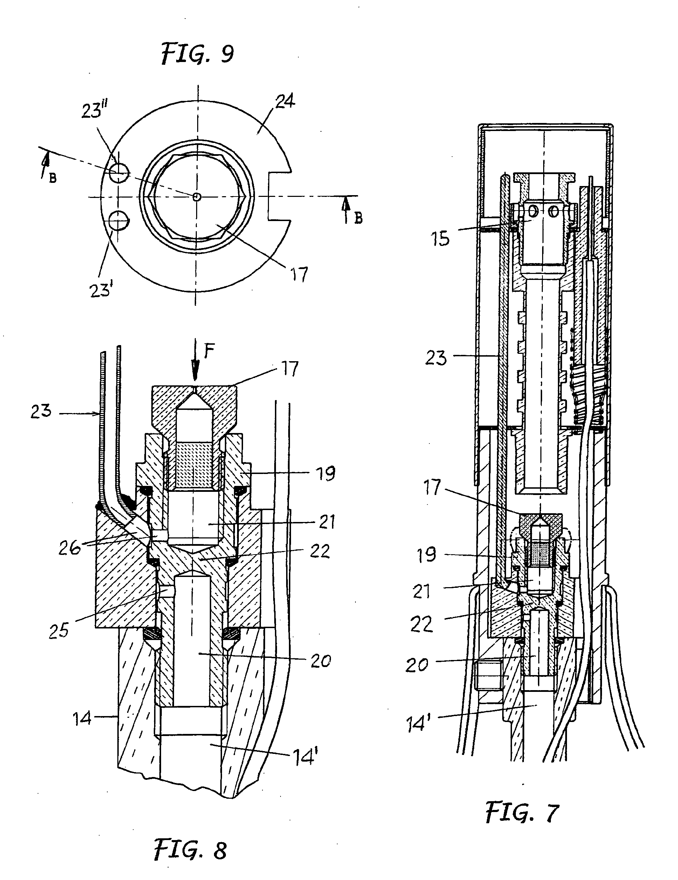

Fig. 7 shows an enlarged part of the welder as in Fig. 4, but where cutaway is at the point of exit of the gas from the heater pipe;
Fig. 8 shows, a cross section, of a part of Fig. 7 enlarged even further, on a level with the nozzle and corresponding to arrows B-B in Fig. 9; and
Fig. 9 shows a view in the direction of the arrow F in Fig. 8.

### Detailed Description of the Invention

As represented the gas welder under examination includes a body or housing 11 made up of two shells 12, 13 that mate complementally. A valve 14, a burner 15 and an igniting device 16 of the piezoelectric type are assembled in said body. The valve 14 has an entrance 14' which is in communication with a liquid gas cartridge-not shown - and an exit 14" to which a nozzle 17 facing towards the burner 15, is connected, whereas the igniting device 16 is connected to a glow plug 18 placed beside the flame divider of the burner.

The nozzle 17 is applied to a nozzle holder 19 which is fixed to the exit 14" of the valve 14. The nozzle holder 19 has a first chamber 20 and a second chamber 21 separated by an intermediate baffle 22. The first chamber 20 of the nozzle holder, with the valve open, is in communication with the liquid gas cartridge, whereas the second chamber 21 is in communication with the nozzle 17. The first chamber 20 is placed in communication with the second chamber 21 by means of a small copper pipe 23, which extends along the side of the burner 15 as far as its flame divider and which is designed for the transit and heating of the gas coming from the liquid gas cartridge, before it reaches the burner.

More precisely, around the nozzle holder 19 a sealed sleeve 24 is fitted, and the heating pipe 23 is supported by said sleeve. The small pipe 23 has an inlet 23' which communicates with the first chamber 20 of the nozzle holder 19 through coincident holes 25 formed in the sleeve and in the wall of the nozzle holder on a level with said first chamber, and an outlet 23" which communicates with the second chamber through corresponding holes 26 formed in said sleeve and in the wall of the nozzle holder on a level with the second chamber.

Consequently, the gas coming from the liquid gas cartridge through the open valve does not arrive directly at the nozzle, but is made to transit through the small heating pipe 23 which extends as far as the burner. So, once the burner is lit, the supply gas becomes heated by the small pipe, thus eliminating any liquid phase before reaching the nozzle.

## Claims

1. Gas welder, comprising a body and in said body a burner, a control valve of the transit of gas from a liquid gas cartridge to the burner through a nozzle, and eventually a piezoelectric lighter, **characterised by** a means (23) of circulating and heating the gas supplied by the liquid gas cartridge so as to eliminate the liquid phase before the gas reaches nozzle and burner.

2. Gas welder according to claim 1 and where said nozzle (17) is associated with the outlet of said valve through a nozzle holder (19), **characterised by** the fact that the nozzle holder (19) has a first chamber (20) and a second chamber (21) separated by an intermediate baffle (22), the first chamber being in communication with the outlet of said valve, the second in communication with said nozzle, and by the fact that said means of circulation and heating of the gas is made up of a small pipe (23) which extends as far as the burner and which has an entrance (23') in communication with said first chamber (20) and an outlet (23") in communication with said second chamber (21) of the nozzle holder (19).

3. Gas welder according to claim 2, **characterised by** the fact that said nozzle holder is seal coupled to an external sleeve (24), and the fact that said circulation and gas heating tube is supported and extends from said sleeve, the inlet (23') of the small pipe communicatiing with the first chamber (20) by means of coincident holes formed in said sleeve and on the wall of the nozzle holder on a level with said first chamber, whereas the outlet (23") of the small pipe communicates with the second chamber (21) through corresponding formed holes in the sleeve and in the nozzle holder on a level with said first chamber.
